# FASCICULE DE BREVET EUROPEEN

(11) **EP 1 100 225 B1**
(45) Date de publication et mention de la délivrance du brevet: **15.06.2005**
(21) Numéro de dépôt: 00403063.1
(22) Date de dépôt: 06.11.2000
(51) Int. Cl.: H04L 9/00, G06F 9/06, H04L 9/08

(54) **Architecture d'un circuit de chiffrement mettant en oeuvre différents types d'algorithmes de chiffrement simultanément sans perte de performance**
Verschlüsselungsschaltungsarchitektur zur gleichzeitigen Ausführung mehrerer Verschlüsselungsalgorithmen ohne Leistungseinbusse
Encryption circuit architecture implementing simultaneously different encryption algorithms whithout losing performance

(30) Priorité: 09.11.1999 FR 9914067
(43) Date de publication de la demande: 16.05.2001
(73) Titulaire: BULL S.A., 78430 Louveciennes (FR)
(72) Inventeur: Le Quéré, Patrick, 91140 Villebon sur Yvette (FR)

(56) Documents cités:
- US-A- 5 682 027
- US-A- 5 805 712

## Description

La présente invention se situe dans le domaine du chiffrement et concerne plus particulièrement une architecture d'un circuit de chiffrement mettant en oeuvre différents type d'algorithmes de chiffrement simultanément.

Cette architecture est matérialisée par un circuit supporté par une carte PCI, abréviations anglo-saxonnes pour "Peripheral Component Interconnect", et permet d'implémenter différents algorithmes de chiffrement en parallèle sans perte de performance, sur une machine (serveur ou station). Elle joue également le rôle d'un coffre fort où sont conservés les éléments secrets (clés et certificats) nécessaires à toute fonction de chiffrement électronique.

Le besoin accru de performance en cryptographie associé à celui d'inviolabilité conduit les fournisseurs de systèmes de sécurité à privilégier des solutions matérielles sous forme de carte additionnelle.

Une telle carte couplée à un serveur constituera l'élément matériel de sécurité du serveur.

On connaît des implémentations d'architectures de sécurité à base de composants ASIC, abréviations anglo-saxonnes pour "Application Specific Integrated Circuit", et qui nécessitent des coûts de développement élevés pour une solution qui restera figée aussi bien du côté constructeur que du côté utilisateur.

D'autre part, il n'existe pas aujourd'hui d'architecture capable d'exécuter un ensemble d'algorithmes de manière simultanée avec un débit garanti pour chacun d'entre eux.

Le document US-A-5 682 027 décrit un système pour exécuter des transactions entre un (ou plusieurs) hôte et un dispositif intelligent portable.

L'invention a notamment pour but de pallier les inconvénients précités et de répondre aux nouvelles exigences du marché de la sécurité.

A cet effet, l'invention a pour objet une architecture d'un circuit de chiffrement traitant simultanément différents algorithmes de chiffrement, le circuit étant apte à être couplé à un système hôte hébergé par une machine informatique.

Selon l'invention, le circuit comporte:
- un module entrée/sortie, responsable des échanges des données entre le système hôte et le circuit via un bus PCI ;
- un module de chiffrement, couplé au module entrée/sortie, en charge des opérations de chiffrement et de déchiffrement ainsi que du stockage de toutes les informations sensibles du circuit ; et
- des moyens d'isolation entre le module entrée/sortie et le module de chiffrement, rendant inaccessibles au système hôte les informations sensibles stockées dans le module de chiffrement, et assurant le parallélisme des traitements effectués par le module entrée/sortie et le module de chiffrement.

L'invention a pour premier avantage de permettre l'exécution rapide des principaux algorithmes de chiffrement selon deux niveaux de parallélisme, un premier parallélisme au niveau des traitements effectués par le module entrée/sortie et le module de chiffrement, et un deuxième parallélisme dans l'exécution des différents algorithmes de chiffrement.

L'invention a pour autre avantage de rendre invisible au système hôte, toutes les ressources d'encryptage mises à la disposition du système et d'assurer le stockage sécurisé de secrets tels que les clés et les certificats. Les fonctions sensibles de la carte (algorithmes et clés) sont toutes localisées dans le module de chiffrement et sont inaccessibles depuis le bus PCI.

L'invention a également pour avantage de faire cohabiter des implémentations matérielles et logicielles de différents algorithmes de chiffrement sans pertes de performance en garantissant les débits pour chacun d'entre eux.

Elle a encore pour avantage d'être évolutive par le choix de technologies standards à microprocesseurs et logique programmable par opposition à des implémentations plus classiques à base de circuits spécifiques (ASIC).

L'invention permet notamment d'implémenter des algorithmes propriétaires par simple modification du code des processeurs de chiffrement ou par chargement d'un nouveau fichier de configuration des automates de chiffrement du module de chiffrement.

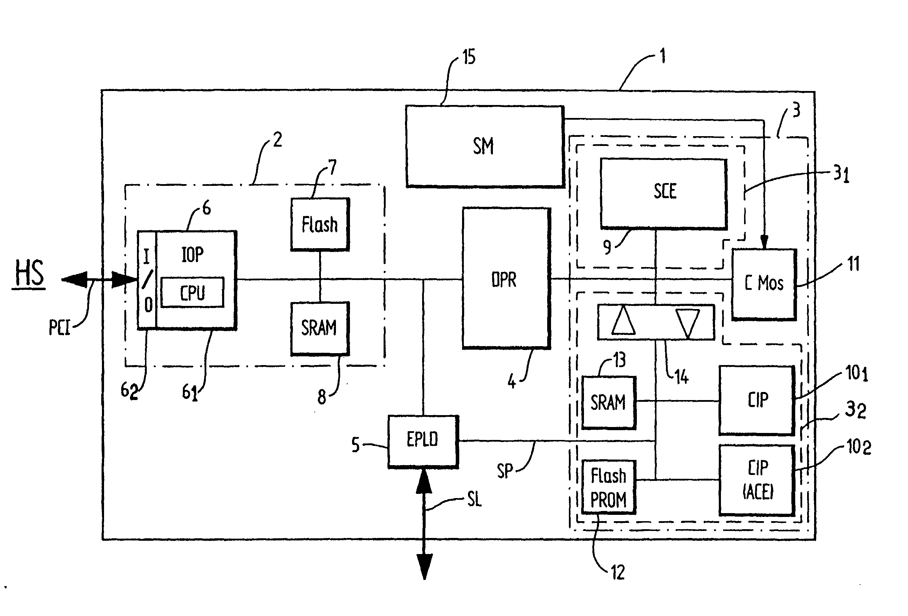

D'autres avantages et caractéristiques de la présente invention apparaîtront à la lecture de la description qui suit faite en référence à la figure annexée qui représente le schéma bloc d'une architecture selon l'invention.

Par commodité, on désignera dans la suite de la description le module de chiffrement/déchiffrement par "module de chiffrement".

Les liaisons entre chaque module sont tous des liens bidirectionnels sauf spécifiés.

Le circuit de chiffrement 1 selon l'invention s'articule autour de deux modules principaux :
- un module entrée/sortie 2 responsable des échanges de données entre les ressources de chiffrement et un système hôte HS via un bus PCI ; et
- un module de chiffrement 3 en charge des opérations de chiffrement et de déchiffrement ainsi que du stockage des secrets.

Ces deux modules 2 et 3, délimités respectivement par une ligne fermée en trait mixte, dialoguent au travers d'une mémoire double-port DPR 4 qui permet l'échange des données et des commandes/statuts entre les deux modules 2 et 3.

Une liaison série SL pilotée par le module de chiffrement 3 permet en outre de rentrer les clés de base par un chemin sécurisé SP indépendant du chemin fonctionnel normal (bus PCI) répondant ainsi à l'exigence imposée par la norme FIPS140.

Cette liaison SL est connectée à la carte 1 via un module EPLD 5, abréviations anglo-saxonnes pour "Erasable Programmable Logic Device", couplée entre le module entrée/sortie 2 et le module de chiffrement 3 et qui assure le cohérence logique entre les modules.

Le module entrée/sortie 2 comporte les éléments suivants :
- un microcontrôleur IOP 6 constitué principalement d'un processeur 6₁ et d'une interface PCI 6₂, intégrant des canaux DMA, abréviations anglo-saxonnes pour "Direct Memory Access". Ce sont des canaux spécifiques, ou dédiés au processeur, par lesquels transitent les données échangées entre les mémoires, couplées au processeur, sans utiliser les ressources du processeur ;
- une mémoire flash 7 qui est une mémoire qui conserve les données stockées sans source d'alimentation et dont la capacité mémoire est par exemple de 512 Kilo-octets ; et
- une mémoire SRAM 8, abréviations anglo-saxonnes pour "Static Random Acces Memory", qui est une mémoire qui nécessite une source d'alimentation pour conserver les données stockées dans la mémoire et dont la capacité mémoire est par exemple de 2 Mega-octets.

Les transferts de données entre le module de chiffrement 3 et le système hôte HS ont lieu en simultanéité avec les opérations de chiffrement réalisées par le module de chiffrement 3 permettant ainsi d'optimiser les performances globales de la carte 1.

La mémoire flash 7 contient le code du processeur du microcontrôleur IOP 6. Au démarrage, le processeur recopie le contenu de la mémoire flash 7 dans la mémoire SRAM 8 ; le code s'exécutant dans cette mémoire pour plus de performance.

La mémoire SRAM 8 peut aussi être remplacée par une mémoire SDRAM, abréviations anglo-saxonnes pour "Synchronous Dynamic RAM", qui est une mémoire dynamique rapide.

Le microcontrôleur IOP 6 est capable de gérer ce type de mémoire sans perte de performance.

Le choix du microcontrôleur dépend principalement des objectifs de performance désirés ainsi que de la consommation totale de la carte supportant le circuit qui est généralement limitée à 25 W (spécification PCI).

La mémoire double-port DPR 4 réalise l'isolation entre le module entrée/sortie 2 et le module de chiffrement 3 rendant ainsi ce dernier inaccessible au système hôte HS.

Sa capacité mémoire est dans l'exemple décrit de 64 Kilo-octets. Elle stocke temporairement les données qui sont destinées à être chiffrées ou déchiffrées par des automates de chiffrement du module de chiffrement 3.

Elle est divisée en deux zones :
- une zone de commandes, par exemple de 4 Kilo-octets, dans laquelle le microcontrôleur IOP 6 écrit les blocs de commandes à destination des automates ; et
- une zone de données, par exemple de 60 Kilo-octets, contenant les données destinées à être traitées par les automates.

Le module de chiffrement 3 comporte un premier et un deuxième sous-module de chiffrement 3₁ et 3₂, délimités respectivement par une ligne fermée discontinue.

Le premier sous-module 3₁ comporte un composant SCE 9, abréviations anglo-saxonnes pour "Symetric cipher engine", dédié au traitement des algorithmes de chiffrement symétriques, couplé au bus de la mémoire double-port 4.

Le deuxième sous-module 3₂ est dédié au traitement des algorithmes de chiffrement asymétriques.

Il est couplé au bus de la mémoire double-port 4, et comporte un bus interne distinct et isolé du bus de la mémoire double-port 4.

Il comporte en outre :
- un ou deux processeurs CIP 10₁, 10₂, abréviations anglo-saxonnes pour "Cipher processor" ;
- un processeur ACE 10₂, abréviations anglo-saxonnes pour "Asymetric cipher processor", qui dans une variante de réalisation remplace l'un des deux processeurs de chiffrement CIP 10₁, 10₂ ;
- une mémoire CMOS 11, par exemple de capacité mémoire de 256 Kilo-octets, sauvegardée par pile ;
- une mémoire flash PROM 12, abréviations anglo-saxonnes pour "Prorammable Read Only Memory", par exemple de capacité mémoire de 512 Kilo-octets ; et
- une mémoire SRAM 13, par exemple de capacité mémoire de 256 Kilo-octets.

Comme illustré sur le schéma bloc de la figure, le composant SCE 9 et la mémoire CMOS 11 sont couplés directement au bus de la mémoire double-port DPR 4 tandis que les processeurs CIP 10₁ et 10₂, les mémoires flash 12 et SRAM 13 sont couplées à un bus distinct et isolé du bus de la mémoire double-port DPR 4 au moyen d'un isolateur de bus 14, appelé également "transceiver" de bus, et représenté sur la figure par un bloc avec deux flèches tête-bêche.

La mémoire flash PROM 12 située sur le bus des processeurs CIP 10₁ et 10₂ contient l'ensemble des logiciels exploités par le module de chiffrement 3.

Le rôle de la mémoire SRAM 13 est double :
- elle permet d'une part, l'exécution rapide du code des processeurs CIP 10₁, et 10₂ ; le code est recopié dans la mémoire à la mise sous tension à partir de la mémoire flash PROM 12 ;
- elle permet d'autre part, de stocker temporairement les données pendant l'exécution des algorithmes.

Cette particularité de l'architecture garantit l'indépendance des différents automates de chiffrement les uns par rapport aux autres.

Le processeur CIP 10₁ et le processeur ACE 10₂ accèdent tous deux à la mémoire double-port DPR 4 pour lire ou écrire les données à chiffrer mais la totalité du traitement des algorithmes proprement dit s'effectue dans leur espace mémoire propre (antémémoire interne et SRAM 13) sans interférer avec le composant SCE 9.

Le composant SCE 9 intègre les différents automates de chiffrement symétriques (un automate par algorithme) du type DES, RC4, etc. ainsi qu'un générateur de nombres aléatoires non représenté.

Chaque automate travaille indépendamment des autres et accède à la mémoire double-port DPR 4 pour lire son bloc de commande (inscrit par le microcontrôleur IOP 6) et les données à traiter correspondantes.

Le parallélisme du traitement ainsi réalisé permet de garantir un débit optimal pour chaque algorithme même en cas d'utilisation simultanée des automates. La seule limitation du traitement est imposée par l'accès à la mémoire double-port DPR 4 qui est partagée par tous les automates.

La bande passante du bus de données vers cette mémoire doit donc être supérieure à la somme des débits de chaque algorithme pour ne pas limiter la performance de ceux-ci.

Le composant SCE 9 est réalisé en technologie programmable connue également sous l'appellation FPGA, abréviations anglo-saxonnes pour "Field Programmable Gate Array," et qui est un circuit, ou puce, programmable comportant une grande densité de portes logiques, ce qui apporte toute la souplesse nécessaire pour implémenter, à la demande, de nouveaux algorithmes notamment des algorithmes propriétaires.

Les données de configuration de ce composant sont contenues dans la mémoire flash PROM 12, et sont chargées dans le composant SCE 9 à la mise sous tension sous contrôle du processeur CIP 10₁.

Le processeur CIP 10₁ implémente, selon un logiciel de programmation déterminé, les algorithmes non implémentés dans le composant SCE 9. Il implémente aussi les algorithmes asymétriques de type RSA avec ou sans l'aide de l'automate spécialisé implémenté par le processeur ACE 10₂. Il prend en compte l'initialisation des paramètres de sécurité (clés) via la liaison série SL.

L'utilisation d'un processeur performant à ce niveau garantit des performances optimales dans l'exécution des algorithmes ainsi qu'une grande flexibilité pour l'implémentation d'algorithmes additionnels.

On peut aussi, grâce à ce processeur, télécharger des algorithmes propriétaires via la liaison série SL.

Selon un premier mode de réalisation, deux processeurs CIP 10₁ et 10₂ sont implémentés :

L'un 10₁ est requis pour l'exécution de l'algorithme RSA, l'autre 10₂ implémente les algorithmes non encore supportés par le composant SCE 9.

Selon un second mode de réalisation, il n' y a plus qu'un seul processeur CIP 10₁ assisté par un processeur ACE 10₂ remplaçant l'un des deux processeurs CIP 10₁ et 10₂ du premier mode de réalisation, et qui implémente, en logique programmable, le calcul intensif lié au protocole de l'algorithme RSA.

Tous les algorithmes requis sont implémentés en logique programmable dans des automates du composant SCE 9.

Ce composant est réalisé en technologie programmable FPGA.

La mémoire CMOS 11 contient les clés et autres secrets de la carte 1. Elle est sauvegardée par une pile et protégée par différents mécanismes de sécurité SM 15 connus qui, en cas d'anomalies sont traduites comme une tentative d'intrusion et effacent son contenu.

Ces anomalies sont par exemple dues à :
- une élévation ou un abaissement anormal de la température ;
- une élévation ou un abaissement anormal de la tension d'alimentation ;
- un désenffichage de la carte ;
- une tentative d'intrusion physique (du côté de la carte ou du système hôte) ;
- etc.

Chacun des événements ci-dessus déclenche un signal d'alarme qui agit sur la remise à zéro de la mémoire CMOS 11.

## Revendications

1. Architecture d'un circuit (1) de chiffrement traitant simultanément différents algorithmes de chiffrement, le circuit étant apte à être couplé à un système hôte (HS) hébergé par une machine informatique, **caractérisée en ce que** le circuit comporte :
- un module entrée/sortie (2), responsable des échanges des données entre le système hôte (HS) et le circuit (1) via un bus dédié (PCI),
- un module de chiffrement (3), couplé au module entrée/sortie (2), en charge des opérations de chiffrement et de déchiffrement ainsi que du stockage de toutes les informations sensibles du circuit (1) ; et
- des moyens d'isolation (4) entre le module entrée/sortie (2) et le module de chiffrement (3), rendant inaccessibles au système hôte (HS) les informations sensibles stockées dans le module de chiffrement (3), et assurant le parallélismes des traitements effectués par le module entrée/sortie (2) et le module de chiffrement (3).

2. Architecture selon la revendication 1, **caractérisée en ce que** les moyens d'isolation du circuit (1) comporte une mémoire double-port (4) couplée entre le module entrée/sortie (2) et le module de chiffrement (3), comportant son propre bus et assurant à la fois l'échange des données, des commandes et des statuts entre les deux modules (2 et 3), et l'isolation entre les deux modules (2 et 3).

3. Architecture selon l'une quelconque des revendications 1 et 2, **caractérisée en ce que** le module de chiffrement (3) comporte :
- un premier sous-module de chiffrement (3₁), dédié au traitement des algorithmes de chiffrement symétriques, couplé au bus de la mémoire double-port (4) ;
- un deuxième sous-module de chiffrement (3₂) dédié au traitement des algorithmes de chiffrement asymétriques (4), couplé au bus de la mémoire double-port (4), et comportant un bus interne distinct et isolé du bus de la mémoire double-port (4) ; et
- une mémoire CMOS (11) couplée à la mémoire double-port (4) via le bus de la mémoire double-port contenant les clés de chiffrement .

4. Architecture selon la revendication 3, **caractérisées en ce que** le premier sous-module de chiffrement (3₁) comporte un composant d'encryptage (9) couplé à la mémoire double-port (4) via le bus de la mémoire (4), comportant différents automates de chiffrement dédiés respectivement au traitement des algorithmes de chiffrement symétriques, et **en ce que** le deuxième sous-module de chiffrement (3₂) comporte au moins deux processeurs de chiffrement (10₁ et 10₂), dédiés respectivement au traitement des algorithmes de chiffrement asymétriques, couplés au module d'encryptage (9) via le bus interne du deuxième sous-module (3₂) qui est isolé du bus de la mémoire double-port par un isolateur de bus (14).

5. Architecture selon la revendication 4, **caractérisée en ce que** les deux processeurs (10₁ et 10₂) du module de chiffrement (3) sont de type CIP.

6. Architecture selon la revendication 4, **caractérisée en ce que** l'un (10₁) des processeurs de chiffrement (10₁ et 10₂) est de type CIP, et **en ce que** l'autre (10₂) est de type ACE.

7. Architecture selon la revendication 6, **caractérisée en ce que** le processeur de chiffrement (10₂) de type ACE est réalisé en technologie programmable FPGA.

8. Architecture selon l'une quelconque des revendications 4 à 7, **caractérisée en ce que** le module d'encryptage (9) est de type SCE.

9. Architecture selon la revendication 8, **caractérisée en ce que** le module d'encryptage (9) est réalisé en technologie programmable FPGA.

10. Architecture selon l'une quelconque des revendications 3 à 9, **caractérisée en ce que** le deuxième sous-module de chiffrement (3₂) comporte en outre une mémoire flash PROM (12),et une mémoire SRAM (13) couplés au bus interne du sous-module (3₂).

11. Architecture selon l'une quelconque des revendications 3 à 10, **caractérisée en ce que** la mémoire CMOS (11) est protégée par des mécanismes de sécurité (15) déclenchant la remise à zéro de la mémoire CMOS (11 ) en cas d'alarme.

12. Architecture selon l'une quelconque des revendications 1 à 11, **caractérisée en ce que** le module entrée/sortie (2) comporte :
- un microcontrôleur (6) comportant un processeur entrée/sortie (6₁) et une interface PCI (6₂) intégrant des canaux DMA chargés d'exécuter les transferts de données entre le système hôte (HS) et le circuit (1) ;
- une mémoire flash (7) contenant le code du processeur entré/sortie (6₁) ; et
- une mémoire SRAM (8) qui reçoit une copie du contenu de la mémoire flash (7) au démarrage du processeur entrée/sortie (6₁).

13. Architecture selon l'une quelconque des revendications précédentes, comportant une liaison série (SL) permettant de rentrer des clés de base par un chemin sécurisé indépendant du bus PCI, **caractérisée en ce que** la liaison est pilotée par le module de chiffrement (3).

14. Architecture selon la revendication 13, **caractérisée en ce que** la liaison série (SL) permet le téléchargement d'algorithmes propriétaires dans le premier sous-module de chiffrement (3₁).

## Patentansprüche

1. Architektur einer Chiffrierungsschaltung (1), die gleichzeitig verschiedene Chiffrierungsalgorithmen verarbeitet, wobei die Schaltung mit einem Host-System (HS), das in einer Datenverarbeitungsmaschine aufgenommen ist, gekoppelt werden kann, **dadurch gekennzeichnet, dass** die Schaltung umfasst:
- ein Eingangs/Ausgangs-Modul (2), das Datenaustauschvorgängen zwischen dem Host-System (HS) und der Schaltung (1) über einen dedizierten Bus (PCI) dient,
- ein Chiffrierungsmodul (3), das mit dem Eingangs/Ausgangs-Modul (2) gekoppelt ist und die Aufgabe hat, Chiffrierungs- und Dechiffrierungsoperationen sowie Operationen zum Speichern aller sensiblen Informationen der Schaltung (1) auszuführen; und
- Isolationsmittel (4) zwischen dem Eingangs/Ausgangs-Modul (2) und dem Chiffrierungsmodul (3), die die sensiblen Informationen, die in dem Chiffrierungsmodul (3) gespeichert sind, für das Host-System (HS) unzugänglich machen und die Parallelität der von dem Eingangs/Ausgangs-Modul (2) und dem Chiffrierungsmodul (3) ausgeführten Verarbeitungen sicherstellen.

2. Architektur nach Anspruch 1, **dadurch gekennzeichnet, dass** die Isolationsmittel der Schaltung (1) einen Dualport-Speicher (4) umfasst, der zwischen das Eingangs/Ausgangs-Modul (2) und das Chiffrierungsmodul (3) gekoppelt ist, seinen eigenen Bus enthält und zugleich den Austausch von Daten, von Befehlen und des jeweiligen Status zwischen den zwei Modulen (2 und 3) sowie die Isolation zwischen den zwei Modulen (2 und 3) gewährleistet.

3. Architektur nach einem der Ansprüche 1 und 2, **dadurch gekennzeichnet, dass** das Chiffrierungsmodul (3) umfasst:
- ein erstes Chiffrierungsuntermodul (3₁), das für die Verarbeitung symmetrischer Chiffrierungsalgorithmen bestimmt ist und mit dem Bus des Dualport-Speichers (4) gekoppelt ist;
- ein zweites Chiffrierungsuntermodul (3₂), das für die Verarbeitung asymmetrischer Chiffrierungsalgorithmen (4) bestimmt ist, mit dem Bus des Dualport-Speichers (4) gekoppelt ist und einen internen Bus aufweist, der von dem Bus des Dualport-Speichers (4) verschieden und hiervon getrennt ist; und
- einen CMOS-Speicher (11), der über den Bus des Dualport-Speichers mit dem Dualport-Speicher (4) gekoppelt ist und die Chiffrierungsschlüssel enthält.

4. Architektur nach Anspruch 3, **dadurch gekennzeichnet, dass** das erste Chiffrierungsuntermodul (3₁) eine Verschlüsselungskomponente (9), die über den Bus des Speichers (4) mit dem Dualport-Speicher (4) gekoppelt ist und verschiedene Chiffrierungsautomaten enthält, die jeweils für die Verarbeitung der symmetrischen Chiffrierungsalgorithmen bestimmt sind, und dass das zweite Chiffrierungsuntermodul (3₂) wenigstens zwei Chiffrierungsprozessoren (10₁ und 10₂) enthält, die jeweils für die Verarbeitung der asymmetrischen Chiffrierungsalgorithmen bestimmt sind und über den internen Bus des zweiten Untermoduls (3₂), der von dem Bus des Dualport-Speichers durch einen Busisolator (14) getrennt ist, mit dem Verschlüsselungsmodul (9) gekoppelt sind.

5. Architektur nach Anspruch 4, **dadurch gekennzeichnet, dass** die zwei Prozessoren (10₁ und 10₂) des Chiffrierungsmoduls (3) vom Typ CIP sind.

6. Architektur nach Anspruch 4, **dadurch gekennzeichnet, dass** einer (10₁) der Chiffrierungsprozessoren (10₁ und 10₂) vom Typ CIP ist und dass der andere (10₂) vom Typ ACE ist.

7. Architektur nach Anspruch 6, **dadurch gekennzeichnet, dass** der Chiffrierungsprozessor (10₂) des Typs ACE in der programmierbaren FPGA-Technologie verwirklicht ist.

8. Architektur nach einem der Ansprüche 4 bis 7, **dadurch gekennzeichnet, dass** das Verschlüsselungsmodul (9) vom Typ SCE ist.

9. Architektur nach Anspruch 8, **dadurch gekennzeichnet, dass** das Verschlüsselungsmodul (9) in der programmierbaren FPGA-Technologie verwirklicht ist.

10. Architektur nach einem der Ansprüche 3 bis 9, **dadurch gekennzeichnet, dass** das zweite Verschlüsselungsuntermodul (3₂) außerdem einen Flash-PROM-Speicher (12) und einen SRAM-Speicher (13), die mit dem internen Bus des Untermoduls (3₂) gekoppelt sind, umfasst.

11. Architektur nach einem der Ansprüche 3 bis 10, **dadurch gekennzeichnet, dass** der CMOS-Speicher (11) durch Sicherheitsmechanismen (15) geschützt ist, die im Alarmfall die Rücksetzung des CMOS-Speichers (11) auf null auslösen.

12. Architektur nach einem der Ansprüche 1 bis 11, **dadurch gekennzeichnet, dass** das Eingangs/Ausgangs-Modul (2) umfasst:
- einen Mikrocontroller (6), der einen Eingangs/Ausgangs-Prozessor (6₁) und eine PCI-Schnittstelle (6₂) enthält, die die DMA-Kanäle integriert, die die Aufgabe haben, die Datenübertragungen zwischen dem Host-System (HS) und der Schaltung (1) auszuführen;
- einen Flash-Speicher (7), der den Code des Eingangs/Ausgangs-Prozessors (6₁) enthält; und
- einen SRAM-Speicher (8), der beim Hochfahren des Eingangs/Ausgangs-Prozessors (6₁) eine Kopie des Inhalts des Flash-Speichers (7) empfängt.

13. Architektur nach einem der vorhergehenden Ansprüche, die eine serielle Verbindung (SL) umfasst, die ermöglicht, die Basisschlüssel durch einen gesicherten Weg vom PCI-Bus unabhängig zu machen, **dadurch gekennzeichnet, dass** die Verbindung durch das Chiffrierungsmodul (3) gesteuert wird.

14. Architektur nach Anspruch 13, **dadurch gekennzeichnet, dass** die serielle Verbindung (SL) das Fernladen von proprietären Algorithmen in das erste Chiffrierungsuntermodul (3₁) ermöglicht.

## Claims

1. Architecture of an encryption circuit (1) processing simultaneously various encryption algorithms, the circuit being capable of being coupled to a host system (HS) hosted by a data-processing machine, **characterised in that** the circuit comprises:
- an input/output module (2), responsible for exchanging data between the host system (HS) and the circuit (1) via a dedicated bus (PCI),
- an encryption module (3), coupled to the input/output module (2), in charge of the encryption and decryption operations as well as the storage of all sensitive information on the circuit (1); and
- isolation means (4) between the input/output module (2) and the encryption module (3), making sensitive information stored in the encryption module (3) inaccessible to the host system (HS) and ensuring that processing by the input/output module (2) and the encryption module (3) is carried out in parallel.

2. Architecture according to Claim 1, **characterised in that** the isolation means for the circuit (1) comprises a dual-port memory (4) coupled between the input/output module (2) and the encryption module (3), comprising its own bus and ensuring both the exchange of data, commands and statuses between the two modules (2 and 3), and the isolation between the two modules (2 and 3).

3. Architecture according to either one of Claims 1 and 2, **characterised in that** the encryption module (3) comprises:
- a first encryption sub-module (3₁), dedicated to the processing of symmetric encryption algorithms, coupled to the bus of the dual-port memory (4);
- a second encryption sub-module (3₂) dedicated to the processing of asymmetric encryption algorithms (4), coupled to the bus of the dual-port memory (4) and comprising an internal bus distinct and isolated from the bus of the dual-port memory (4); and
- a CMOS memory (11) coupled to the dual-port memory (4) via the bus of the dual-port memory containing the encryption keys.

4. Architecture according to Claim 3, **characterised in that** the first encryption sub-module (3₁) comprises an encryption component (9) coupled to the dual-port memory (4) via the bus of the memory (4), comprising various encryption automata dedicated respectively to the processing of symmetric encryption algorithms, and **in that** the second encryption sub-module (3₂) comprises at least two encryption processors (10₁ and 10₂), dedicated respectively to the processing of asymmetric encryption algorithms, coupled to the encryption module (9) via the internal bus of the second sub-module (3₂), which is isolated from the bus of the dual-port memory by a bus isolator (14).

5. Architecture according to Claim 4, **characterised in that** the two processors (10₁ and 10₂) of the encryption module (3) are of CIP type.

6. Architecture according to Claim 4, **characterised in that** one (10₁) of the encryption processors (10₁ and 10₂) is of CIP type, and **in that** the other one (10₂) is of ACE type.

7. Architecture according to Claim 6, **characterised in that** the encryption processor (10₂) of ACE type is produced with FPGA programmable technology.

8. Architecture according to any one of Claims 4 to 7, **characterised in that** the encryption module (9) is of SCE type.

9. Architecture according to Claim 8, **characterised in that** the encryption module (9) is produced with FPGA programmable technology.

10. Architecture according to any one of Claims 3 to 9, **characterised in that** the second encryption sub-module (3₂) further comprises a PROM flash memory (12) and an SRAM memory (13) coupled to the internal bus of the sub-module (3₂).

11. Architecture according to any one of Claims 3 to 10, **characterised in that** the CMOS memory (11) is protected by security mechanisms (15) triggering the resetting of the CMOS memory (11) in the event of an alarm.

12. Architecture according to any one of Claims 1 to 11, **characterised in that** the input/output module (2) comprises:
- a microcontroller (6) comprising an input/output processor (6₁) and a PCl interface (6₂) incorporating DMA channels having the task of transferring data between the host system (HS) and the circuit (1);
- a flash memory (7) containing the code of the input/output processor (6₁); and
- an SRAM memory (8) that receives a copy of the contents of the flash memory (7) when the input/output processor (6₁) starts up.

13. Architecture according to any one of the preceding claims, comprising a serial link (SL) making it possible to enter basic keys via a secured path independent of the bus PCI, **characterised in that** the link is controlled by the encryption module (3).

14. Architecture according to Claim 13, **characterised in that** the serial link (SL) permits the remote loading of proprietary algorithms in the first encryption sub-module (3₁).
